# EUROPEAN PATENT APPLICATION

(11) **EP 4 682 976 A1**
(43) Date of publication of application: **21.01.2026**
(21) Application number: 24823517.8
(22) Date of filing: 07.03.2024
(51) Int. Cl.: H01M 4/36, H01M 4/525, H01M 4/62, H01M 4/131, H01M 10/052, H01M 4/02

(54) **COMPOSITE CATHODE ACTIVE MATERIAL, PREPARATION METHOD THEREFOR, AND LITHIUM SECONDARY BATTERY COMPRISING SAME**

(30) Priority: 12.06.2023 KR 20230075012; 06.03.2024 KR 20240031896
(71) Applicant: LG Energy Solution, Ltd., Seoul 07335 (KR)
(72) Inventor: JANG, Eunji, Daejeon 34122 (KR); BYUN, Seoungwoo, Daejeon 34122 (KR); LEE, Sangryeo, Daejeon 34122 (KR); RYU, Jihoon, Daejeon 34122 (KR); KIM, Dong Kyu, Daejeon 34122 (KR); LIM, Taeseob, Daejeon 34122 (KR)
(74) Representative: Goddar, Heinz J.
(86) International application number: PCT/KR2024/002916
(87) International publication number: WO 2024/257995

(57) **Abstract**

The present disclosure relates to a composite positive electrode active material to which an oxide-based solid electrolyte can be adhered to improve the conductivity, capacity, and output characteristics of a lithium secondary battery, without deteriorating the physical properties of a positive electrode active material itself, a preparation method thereof and a lithium secondary battery comprising the same. The composite positive electrode active material includes: positive electrode active material particles; and oxide-based solid electrolyte particles formed on the positive electrode active material particles and a crosslinked polymer binder, wherein the oxide-based solid electrolyte particles are adhered to the surface of the positive electrode active material particles via the crosslinked polymer binder.

## Description

### [TECHNICAL FIELD]

### Cross Citation with Related Application(s)

This application claims the benefit of Korean Patent Application No. 10-2023-0075012 filed on June 12, 2023 and Korean Patent Application No. 10-2024-0031896 filed on March 6, 2024 in the Korean Intellectual Property Office, the disclosures of which are incorporated herein by reference in their entirety.

The present disclosure relates to a composite positive electrode active material to which an oxide-based solid electrolyte can be adhered to improve the conductivity, capacity, and output characteristics of a lithium secondary battery, without deteriorating the physical properties of a positive electrode active material itself, a preparation method thereof and a lithium secondary battery comprising the same.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

In this regard, in order to improve the capacity, output and conductivity inside an electrode of the lithium secondary battery and increase the stability, methods have been proposed, such incorporating inorganic solid electrolyte particles together in the active material layer of the positive electrode or coating such inorganic solid electrolyte particles onto the positive electrode active material particles to prepare and use a coating or composite positive electrode active material.

Conventionally, in order to prepare the composite positive electrode active material, a method has been considered in which positive electrode active material particles and inorganic solid electrolyte particles are mixed in a wet or dry manner, selectively milled and then fired. However, in recent years, positive electrode active materials containing a high content of nickel have been mainly used to increase the capacity and energy density of lithium secondary batteries. Since such a positive electrode active material containing a high content of nickel exhibits low moisture stability, the wet method is not easy to apply.

In addition, according to the conventional method, in order to adhere the solid electrolyte particles, which are inorganic particles, onto the positive electrode active material particles, there was a difficulty in the process in which firing and re-firing had to proceed at a considerably high temperature. Further, in such a high-temperature firing process, the crystal structure or the like of the surface of the positive electrode active material particles may change, and thus, there is a disadvantage in that its electrochemical properties and stability may deteriorate, giant particles are formed due to aggregation during high-temperature firing, and re-milling is required.

Further, when the firing temperature is lowered, there is a disadvantage in that many of the inorganic solid electrolyte particles are detached from the positive electrode active material particles, which makes it difficult to sufficiently improve capacity, output, or conductivity by coating the inorganic solid electrolyte.

Therefore, there is a continuing need for technology development regarding a composite positive electrode active material to which oxide-based solid electrolytes can favorably adhere to improve the capacity and output characteristics of lithium secondary batteries,without deteriorating the characteristics and stability of the positive electrode active material itself due to the high temperature firing, etc.

### [DETAILED DESCRIPTION OF THE INVENTION]

### [Technical Problem]

Therefore, it is an object of the present disclosure to provide a composite positive electrode active material to which an oxide-based solid electrolyte can be adhered to improve the conductivity, capacity, and output characteristics of a lithium secondary battery, without deteriorating the physical properties of apositive electrode active material itself.

It is another object of the present disclosure to provide a preparation method of the composite positive electrode active material in which the composite positive electrode active material can be prepared by a simplified process and a relatively low-temperature heat treatment process.

It is yet another object of the present disclosure to provide a positive electrode and a lithium secondary battery, comprising the composite positive electrode active material and thus exhibiting excellent capacity and output characteristics.

### [Technical Solution]

In one aspect of the present disclosure, there is provided a composite positive electrode active material comprising:
positive electrode active material particles;and
oxide-based solid electrolyte particles and a crosslinked polymer binder formed on the positive electrode active material particles,
wherein the oxide-based solid electrolyte particles are adhered to the surface of the positive electrode active material particles via the crosslinked polymer binder.

In another aspect of the present disclosure, there is provided a preparation method of the composite positive electrode active material, the method comprising the steps of: mixing positive electrode active material particles, oxide-based solid electrolyte particles, and a polymer binder; and heat-curing the mixture.

In another aspect of the present disclosure, there is provided a positive electrode for a lithium secondary battery comprising:a metal current collector; and a positive electrode active material layer formed on the metal current collector and comprising the composite positive electrode active material and a conductive material.

In yet another aspect of the present disclosure, there is provided a lithium secondary battery comprising the positive electrode; a negative electrode; and an electrolyte.

### [Advantageous Effects]

The composite positive electrode active material of the present disclosure is obtained by adhering oxide-based solid electrolyte particles to the positive electrode active material particles through a cured and crosslinked polymer binder, and can be prepared in a simplified process at relatively low cure temperatures.

Therefore, it is possible to suppress the deterioration of the characteristics and stability of the positive electrode active material due to a high-temperature heat treatment process, etc., and the formation of giant particles. At the same time, the oxide-based solid electrolyte particles are stably adhered and retained onto the positive electrode active material particles, thereby improving the capacity, output, conductivity, etc. of the lithium secondary battery.

Therefore, the present disclosure can greatly contribute to the development of next-generation lithium secondary batteries that exhibit improved capacity and output characteristics.

### [BRIEF DESCRIPTION OF THE DRAWING]

FIG. 1 shows the results of analyzing the particle size distribution of the composite positive electrode active material particles of Example 1 and the positive electrode active material particles of Comparative Example 1.
FIG. 2 shows the results of evaluating the resistance for each state of charge for the lithium secondary batteries of Example 1 and Comparative Examples 1 and 2.

### [DETAILED DESCRIPTION OF THE EMBODIMENTS]

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to one embodiment of the present disclosure, there is provided a composite positive electrode active material comprising:
positive electrode active material particles;and
oxide-based solid electrolyte particles and a crosslinked polymer binder formed on the positive electrode active material particles,
wherein the oxide-based solid electrolyte particles are adhered to the surface of the positive electrode active material particles via the crosslinked polymer binder.

In the composite positive electrode active material of the one embodiment, the oxide-based solid electrolyte particles are adhered onto the positive electrode active material particles via the cured and crosslinked polymer binder. Further, as explained in more detail below, the composite positive electrode active material of the one embodiment can be prepared at a relatively low temperature corresponding to the curing temperature of the polymer binder. As a result, it is possible to suppress the deterioration of the characteristics and stability of the positive electrode active material caused by the existing high-temperature heat treatment processes, such as multiple firing processes under high temperatures, and the formation of giant particles during the preparation process, and the composite positive electrode active material can be prepared through a simplified process without progressing further heat treatment or further milling.

In particular, in the composite positive electrode active material, since a crystal structure change on the surface of the positive electrode active material (e.g. a change from a rock salt structure on the surface to a layered structure, etc.)hardly occurs, the risk of battery ignition or explosion due to the crystal structure change is reduced, thereby capable of greatly improving the safety of a lithium secondary battery.

Furthermore, the oxide-based solid electrolyte particles are firmly adhered by the cured and crosslinked polymer binder, and can be stably retained on the positive electrode active material particles. As a result, the capacity, output, conductivity, and the like of a lithium secondary battery can be further improved by coating the oxide-based solid electrolyte particles.

**Hereinafter,** a composite positive electrode active material, a preparation method thereof, a positive electrode, and a lithium secondary battery according to embodiments will be described in more detail.

In the composite positive electrode active material of the one embodiment, the positive electrode active material particle may be a compound capable of reversibly intercalating and deintercalating lithium, and specifically, it may include lithium metal oxide containing lithium and at least one metal such as iron, cobalt, manganese, nickel or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi₁-_{Y}Mn_{Y}O₂ (where 0<Y<1), LiMn₂-_{Z}Ni_{Z}O₄ (where 0<Z<2), etc.), lithium-nickel-cobalt-based oxide (e.g., LiNi₁-_{Y1}Co_{Y1}O₂ (where 0<Y1<1, etc.), lithium-manganese-cobalt-based oxide (e.g., LiCo₁-_{Y2}Mn_{Y2}O₂ (where 0<Y2<1), LiMn₂-_{Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X\_{b} (where M is at least one selected from Al, Mg, and Ti, X is at least one selected from F, S and N, -0.5≤a≤+0.5, 0≤x≤0.5, 0 ≤b ≤0.1), or the like, and any one thereof or a compound of two or more thereof may be used.

Among these, the positive electrode active material includes lithium metal oxide containing lithium; and two or more transition metals including nickel, and the lithium metal oxide may contain nickel in an amount of 80 mol % or more, or 80 to 99 mol %, or 85 to 95 mol % based on the total metal transition content excluding lithium. Such a lithium metal oxide may be represented, for example, by the following Chemical Formula 1:

[Chemical Formula 1] LiₓNiₐCo_{b}M¹_{c}M²_{d}O₂

wherein in Chemical Formula 1, the M¹ may be one or more selected from Mn and Al, or a combination thereof, M² may be one or more selected from the group consisting of Zr, B, W, Mg, Ce, Hf, Ta, La, Ti, Sr, Ba, F, P and S, 0.90≤x≤1.1, or 0.95≤x≤1.08, or 1.0≤x≤1.08, and 0.80≤a<1.0, or 0.80 ≤a≤0.99, or 0.85 ≤a ≤0.95, and b, c, and d can each independently be 0 or more and less than 0.2 (with the proviso that the case in which b, c, and d are all 0 is excluded).

As such a lithium metal oxide containing a high content of nickel is used as a positive electrode active material, the capacity and energy density of a lithium secondary battery can be further improved. Moreover, even if such high-content nickel-containing positive electrode active material particles are used, the composite positive electrode active material of the one embodiment allows the oxide-based solid electrolyte particles to adhere without changing the crystal structure of the positive electrode active material particles due to high temperature firing or the like. Therefore, while retaining the high capacity and energy density, the capacity and output characteristics of the lithium secondary battery can be further improved by the addition of the oxide-based solid electrolyte particles.

In addition, as the oxide-based solid electrolyte particles adhered to the positive electrode active material particles, any solid electrolyte containing lithium in its structure, having a lithium ion source, and having a form of lithium metal oxide or lithium metal phosphate can be used.

Specific examples thereof may include at least one lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte. More specific examples thereof may include at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

Among these, from the viewpoint of favorably adhering to the positive electrode active material particles by the crosslinked polymer binder and improving the conductivity and output of the lithium secondary battery, a Nasicon-**type solid** electrolyte such as the LAGP-based compound or LATP-based compound can be appropriately used.

The oxide-based solid electrolyte particles may be included in an amount of 0.1 to 5 parts by weight, or 0.5 to 4 parts by weight, or 1 to 3.5 parts by weight, based on 100 parts by weight of the positive electrode active material particles. Accordingly, the oxide-based solid electrolyte particles can be favorably adhered to the surface of the positive electrode active material particles, thereby effectively improving the electrochemical characteristics of the lithium secondary battery and at the same time not impairing the characteristics of the positive electrode active material particles.

Further, in the composite positive electrode active material of the above-described embodiments, the positive electrode active material particles may have an average particle size (D50) of 3 to 15 *µ*m, or 5 to 13 *µ*m, or 7 to 12 *µ*m, and the oxide-based solid electrolyte particles may have an average particle size (D50) of 100 nm to 1.3 *µ*m, or 150 nm to 1.0 *µ*m, or 200 to 800 nm. As a result, a plurality of oxide-based solid electrolyte particles can favorably adhere or bond to the surface of the positive electrode active material particles, and the composite positive electrode active material of the one embodiment may exhibit excellent electrochemical properties.

At this time, the average particle size (D50) of each particle can be calculated as the particle size corresponding to 50% of the cumulative volume in a particle size distribution curve, for example, when the particle size distribution of the positive electrode active material particles or the oxide-based solid electrolyte particles is measured using a laser diffraction method and a laser diffraction particle size measuring device.

Meanwhile, the composite positive electrode active material of the one embodiment includes a crosslinked polymer binder that bonds or attaches onto the positive electrode active material particles and allows the oxide-based solid electrolyte particles favorably attach to the surface thereof. Such a crosslinked polymer binder may be a binder in which the polymer binder is cured and crosslinked in the presence or absence of a crosslinking agent, and the polymer binder before curing and crosslinking may be a polymer of the same kind as the polymer binder separately included in the positive electrode active material described hereinafter.

Further, the crosslinked polymer binder may be formed in a form adhering or bonding to the surface of the positive electrode active material particles while covering at least a part of the oxide-based solid electrolyte particles on the positive electrode active material particles.

Through such a crosslinked polymer binder, the oxide-based solid electrolyte particles are favorably bonded or adhered to the surface of the positive electrode active material particles without requiring a high-temperature firing process, so that the composite positive electrode active material of the one embodiment may exhibit improved stability and electrochemical properties.

The crosslinked polymer binder is a polymer known to be usable as a binder in the active material layer of a lithium secondary battery, and may be any polymer that can be cured by methods such as heat curing or photocuring, more **specifically,** a polymer in which heat-curable polymers are cured and crosslinked at a temperature of 100°C or more, or from 100 to 200°C. A specific example thereof may be a polymer crosslinked by curing one or more polymers, copolymers or mixtures of two or more kinds selected from the group consisting of a polyvinylidene fluoride-based polymer, a polyvinyl alcohol-based polymer, a cellulose-based polymer, a polyvinylpyrrolidone-based polymer, a polytetrafluoroethylene-based polymer, and a polyolefin-based polymer. However, in consideration of the characteristics of the positive electrode and favorable adhesion of the oxide-based solid electrolyte particles, a polyvinylidene fluoride-based polymer crosslinked by heat curing may be appropriately used.

The crosslinked polymer binder may be included in an amount of 0.03 to 2 parts by weight, or 0.05 to 1.5 parts by weight, or 0.1 to 1.0 parts by weight based on 100 parts by weight of the positive electrode active material particles. Thereby, the oxide-based solid electrolyte particles can be favorably adhered onto the positive electrode active material particles, and an increase in resistance caused by the crosslinked polymer binder can be reduced.

The composite positive electrode active material of the above-described embodiments may exhibit a uniform particle size distribution as aggregation of particles due to high-temperature firing or the like is reduced during the preparation process. Specifically, the composite positive electrode active material may exhibit a small deviation in particle size, for example, a SPAN derived from the particle size distribution analysis results of 0.3 to 5 *µ*m, or 0.5 to 3 *µ*m, or 0.5 to 1.5 *µ*m.

Meanwhile, the composite positive electrode active material of the one embodiment described above may be prepared by a method comprising the steps of: mixing positive electrode active material particles, oxide-based solid electrolyte particles, and a polymer binder; and heat-curing the mixture.

In such a preparation method, the heat curing step may be carried out in the presence or absence of a crosslinking agent or a curing initiator depending on the kind of the polymer binder, and may be carried out in a temperature range from the curable minimum temperature of the polymer binder to 20°C higher than that. Specifically, the heat curing step may be carried out at a temperature of 100 to 200°C, or 105 to 180°C, or 110 to 150°C.

Through such heat curing, the polymer binder is cured and crosslinked to form a crosslinked polymer binder, and the oxide-based solid electrolyte particles are adhered to the surface of the positive electrode active material particles by such a crosslinked polymer binder, so that a composite positive electrode active material of one embodiment can be prepared.

By such a preparation method, the high-temperature re-firing process or the like for adhering the oxide-based solid electrolyte particles can be omitted, and furthermore, aggregation between positive electrode active material particles during the preparation process is also reduced, thereby reducing the necessity for additional milling steps. Accordingly, while the preparation process is simplified, the deterioration of the characteristics and stability of the positive electrode active material during the high temperature re-firing process or the like can be suppressed, and a composite positive electrode active material having a uniform particle size distribution can be prepared.

Meanwhile, in some cases, curing and adhesion between the crosslinked polymer binders may occur, and if necessary, the method may further include a step of milling the composite positive electrode active material after the heat curing step.

Meanwhile, according to the other embodiments of the disclosure, a positive electrode for a lithium secondary battery comprising the composite positive electrode active material of the above-described one embodiment is provided. Such positive electrode includes a metal current collector; and a positive electrode active material layer formed on the metal current collector and including the composite positive electrode active material of the one embodiment and a conductive material.

In the positive electrode of such other embodiments, the metal current collector is not particularly limited as long as it has conductivity without causing chemical changes in the corresponding battery. For example, stainless steel, aluminum, nickel, titanium, fired carbon, aluminum or stainless steel whose surface is treated with carbon, nickel, titanium, silver, etc., and the like may be used.

Further, the positive electrode active material layer may include the above-described composite positive active material and a conductive material, and may optionally further include a polymer binder.

At this time, the composite positive electrode active material of one embodiment may be included in an amount of 60 to 99% by weight, or 70 to 99% by weight, or 80 to 98% by weight, based on the total weight of the positive electrode active material layer.

Further, the conductive material contained in the positive electrode active material layer is a component for further improving the conductivity of the composite positive electrode active material. Such a conductive material is not particularly limited as long as it has conductivity without causing chemical changes in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium secondary battery including the positive electrode and further improve output characteristics.

Typically, the conductive material may be included in an amount of 1 to 20% by weight, or 1 to 15% by weight, or 1 to 10% by weight, based on the total weight of the positive electrode active material layer.

The polymer binder selectively included in the positive electrode active material layer is a component that assists in the bonding between the composite positive electrode active material and the conductive material and in the bonding to the current collector. Examples of the binder may include a polyvinylidene fluoride-based polymer; a polyvinyl alcohol-based polymer; a cellulose-based polymer such as carboxymethylcellulose (CMC), starch, hydroxypropyl cellulose, regenerated cellulose; a polyvinylpyrrolidone-based polymer; a polytetrafluoroethylene-based polymer; a polyolefin-based polymer such as polyethylene(PE), polypropylene, ethylene-propylene-diene, or sulfonated ethylene-propylene-diene; or rubber-based polymer such as nitrile-based rubber, styrene-butadiene rubber, or fluororubber. Mixtures or copolymers of two or more selected from these may also be used.

In the positive electrode according to the other embodiments, not only the polymer binder contained in the positive electrode active material layer but also the crosslinked polymer binder included in the composite positive electrode active material of one embodiment may function as a kind of polymer binder. Therefore, the polymer binder included in the positive electrode active material layer may be a polymer of the same kind as the crosslinked polymer binder of the composite positive electrode active material, and may be, for example, the same polymer as before curing and crosslinking the crosslinked polymeric binder. Thereby, the content of the polymer binder included in the positive electrode active material layer can be reduced by the content of the crosslinked polymer binder, thereby retaining excellent electrical properties of the positive electrode.

The polymer binder may be included in an amount of 1 to 20% by weight, or 1 to 15% by weight, or 1 to 10% by weight, relative to the total weight of the positive electrode active material layer, based on the sum of the content with the crosslinked polymer binder included in the composite positive electrode active material.

In addition, a filler may be optionally added to the positive electrode as a component for inhibiting the expansion of the positive electrode. Such a filler is not particularly limited as long as it can inhibit the expansion of the electrode without causing chemical changes in the battery, and examples thereof may include olefinic polymers such as polyethylene and polypropylene; fibrous materials such as glass fibers and carbon fibers.

The positive electrode of the above-described one embodiment can be prepared, for example, by dispersing and mixing the composite positive electrode active material, the polymer binder, the conductive material and the like in a dispersion medium (solvent) to form a slurry, and coating the slurry onto the metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, according to another embodiment of the disclosure, a lithium secondary battery comprising the above-mentioned positive electrode; a negative electrode; and an electrolyte is provided. As the lithium secondary battery of such other embodiments includes the composite positive electrode active material or the positive electrode of the above-described embodiments, it can exhibit excellent stability, capacity, and output characteristics.

In the lithium secondary battery of such other embodiments, the negative electrode may have a conventional configuration known in the art. For example, the negative electrode may include a negative electrode current collector and a negative electrode active material layer formed on the negative electrode current collector, wherein the negative electrode active material layer may include, for example, a negative electrode active material and, if necessary, additives such as a conductive material, a binder, and a filler. In addition, such a negative electrode can be formed by a general method of dispersing and mixing each component of the negative electrode active material layer in a dispersion medium (solvent) to form a slurry, coating the slurry onto a negative electrode current collector, followed by drying and rolling.

At this time, the negative electrode current collector may be platinum(Pt), gold(Au), palladium(Pd), iridium(lr), silver(Ag), ruthenium(Ru), nickel(Ni), stainless steel (STS), copper(Cu), molybdenum(Mo), chromium(Cr), carbon(C), titanium(Ti), tungsten(W), ITO(In doped SnO₂), FTO(F doped SnO₂), or an alloy thereof, or copper(Co) or stainless steel whose surface is treated with carbon(C), nickel(Ni), titanium(Ti) or silver(Ag), or the like, but is not necessarily limited thereto. The shape of the negative electrode current collector may be in the form of a foil, a film, a sheet, a punched form, a porous body, a foam or the like.

Further, as the negative electrode active material, a compound capable of reversible intercalation and deintercalation of lithium may be used. A specific example thereof may be a carbonaceous material such as artificial graphite, natural graphite, graphitized carbon fiber or amorphous carbon; a metallic material capable of alloying with lithium, such as Si, Al, Sn, Pb, Sb, Zn, Bi, In, Mg, Ga, Cd, a Si alloy, a Sn alloy or an Al alloy; a metal oxide capable of doping and dedoping lithium such as SiOβ(0 < β < 2), SnO₂, vanadium oxide, or lithium vanadium oxide; or a composite including the metallic material and the carbonaceous material such as a Si-C composite or a Sn-C composite, and any one or a mixture of two or more thereof may be used. Further, as the negative electrode active material, a metal lithium thin film may be used.

In addition, as a carbonaceous material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The above-mentioned negative electrode active material may be included in an amount of 60 to 99% by weight, or 70 to 99% by weight, or 80 to 98% by weight, based on the total weight of the negative electrode active material layer.

In the other embodiments, the negative electrode may not include a negative electrode active material layer, but may include only a negative electrode current collector. In such a negative electrode, lithium ions moved from the positive electrode in a charge and discharge process are electrodeposited on the negative electrode current collector to form a lithium metal layer, and this lithium metal layer can function as a negative electrode active material.

On the other hand, the binder and conductive material included in the negative electrode active material layer can be the same as those described for the positive electrode, and therefore, further description thereof will be omitted.

The lithium secondary battery of the other embodiments described above further includes an electrolyte. In one embodiment, the electrolyte may be a liquid electrolyte containing lithium salt and a non-aqueous organic solvent. Such an electrolyte functions as a transfer medium for lithium ions between the positive electrode and the negative electrode.

The lithium salt contained in the electrolyte is used as a medium for transferring ions within a lithium secondary battery. For example, the lithium salt may include Li⁺ as a cation, and may together include an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻,CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂).

The concentration of the lithium salt can be appropriately changed within the normally usable range, and may be included in the electrolyte at a concentration of 0.5M to 6M, or 1M to 5M.

Meanwhile, the kind of a non-aqueous organic solvent that can be included in the electrolyte is not particularly limited, and any organic solvent that has been known to be applicable tothe electrolyte of a lithium ion battery can be used.Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may **include** trimethyl phosphate, triethyl phosphate, 2-(2,2,2-trifluoroethoxy)-1,3,2-dioxaphosphorane 2-oxide,or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulfolane, or the like.

Meanwhile, the lithium secondary battery of the other embodiments described above may further include a porous separation membrane interposed between the positive electrode and the negative electrode.

Such a porous separation membrane can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separation membrane, and it may be more preferable to apply a porous glass filter (glass fiber non-woven fabric) as a separation membrane. The separation membrane may be an insulating thin film with high ion permeability and mechanical strength, and the pore diameter of the separation membrane may generally range from 0.01 to 10 *µ*m, and the thickness may generally range from 5 to 300 *µ*m, but are not limited thereto.

In addition, in the other embodiments of the lithium secondary battery, the separation membrane may not be interposed, but the above-described electrolyte may be interposed between the positive electrode and the negative electrode in the form of an electrolyte membrane or an electrolyte film. At this time, the electrolyte membrane or the electrolyte film may be a form containing the above-described lithium salt, non-aqueous organic solvent, and/or solid electrolyte in a polymer matrix, or may be in the form of a solid electrolyte membrane or a solid electrolyte film containing a solid electrolyte such as a polymer-based solid electrolyte, an oxide-based solid electrolyte, a sulfide-based solid electrolyte, or a halide-based solid electrolyte. In a more specific embodiment, the electrolyte membrane or the electrolyte film may include an oxide-based solid electrolyte of the same kind as the oxide-based solid electrolyte included in the composite positive electrode active material of one embodiment. Further, a well-known polymer-based solid electrolyte or the like can be used as the polymer matrix. Meanwhile, since the kind of the solid electrolyte or the structure of the electrolyte membrane or electrolyte film may be adapted to the structure of a general semisolid-state battery or all-solid-sate battery, a further explanation thereof will be omitted.

A battery in which an electrolyte membrane containing a solid electrolyte is interposed between the positive electrode and the negative electrode instead of or in addition to the separation membrane interposed between the positive electrode and the negative electrode as described above may be a semi-solid-state battery that uses both a liquid electrolyte and a solid electrolyte, or an all-solid-state battery that includes only a solid electrolyte.

Meanwhile, the lithium secondary battery of the other embodiments may be prepared according to a conventional method in the art. For example, the lithium secondary battery can be prepared by housing an electrode assembly including a positive electrode, a negative electrode, and a separation membrane (or electrolyte membrane) in a case, and injecting and impregnating the above-mentioned electrolyte in the case.

Such a lithium secondary battery can be applied not only to a battery cell used as power sources for small-sized devices, but can also be particularly suitably used as a unit battery in a battery module, which is a power source for medium-sized and large-sized devices.

Hereinafter, the present disclosure will be described in more detail with reference to specific examples. However, the following examples are only exemplary embodiments for facilitating understanding of the invention, and are not intended to limit the scope of the invention.

### Example 1: Preparation of composite positive electrode active material, positive electrode, and lithium secondary battery

As the positive electrode active material, lithium nickel cobalt manganese composite oxide (NCM 811; D50: 10 *µ*m) containing 80 mol% of nickel among all transition metals were used, and as the oxide-based solid electrolyte, LiAl_{0.3}Ti_{1.7}(PO₄)₃ (LATP-based) compound particles with D50: 300 nm were used. Additionally, polyvinylidene fluoride (PVdF) was used as the binder.

3 Parts by weight of oxide-based solid electrolyte particles and 0.1 parts by weight of a binder were mixed with respect to 100 parts by weight of the positive electrode active material particles, further mixed and heat-cured at a temperature of 150 to 180°Cfor 2 hours, and then dried in a vacuum oven at 100°C for 24 hours to prepare a composite positive electrode active material of Example 1 coated with the oxide-based solid electrolyte particles and the cured (crosslinked) binder.

The composite positive electrode active material: conductive material (carbon nanotube): binder (PVdF) were mixed at a weight ratio of 97:1:2,and dispersed in NMP solvent at 3000rpm to prepare a slurry. The slurry was then coated with a uniform thickness onto a 25 *µ*m thick aluminum foil using a blade-type coating machine which is a Mathis coater (Labdryer/coater type LTE, Werner Mathis AG), dried in a vacuum oven at 130°C for 24 hours, and rolled using a roll press machine to prepare a positive electrode for a lithium secondary battery.

SiO was used as a negative electrode active material, and the negative electrode active material: conductive material: binder were mixed at a weight ratio of 96.5:1.5:2, and then the same process as for the above positive electrode was performed to prepare a negative electrode.

The positive electrode and the negative electrode were respectively punched out, and then a separation membrane made of porous polyethylene (PE) film was interposed and laminated between them to prepare an electrode assembly.

The prepared electrode assembly was placed in a pouch and sealed, and then dried in a vacuum oven at 60°C for 24 hours, and an electrolyte solution was injected therein to produce a pouch-type lithium secondary battery. At this time, an electrolyte solution was prepared by dissolving LiPF₆ at a concentration of 1.0M in an organic solvent consisting of ethylene carbonate/ethylmethyl carbonate (mixing volume ratio of EC/EMC was 3/7).

### Comparative Example 1: Production of positive electrode and lithium secondary battery

Instead of the composite positive electrode active material of Example 1, an uncoated lithium nickel cobalt manganese composite oxide (NCM 811; D50: 10 *µ*m) was used as a positive electrode active material.

The positive electrode active material: conductive material (carbon nanotube): binder (PVdF) were mixed at a weight ratio of 97:1:2, and dispersed in NMP solvent at 3000rpm to prepare a slurry. The slurry was then coated with a uniform thickness onto a 25 *µ*m thick aluminum foil using a blade-type coating machine which is a Mathis coater (Labdryer/coater type LTE, Werner Mathis AG), dried in a vacuum oven at 130°C for 24 hours, and rolled using a roll press machine to produce a positive electrode for a lithium secondary battery.

By using this positive electrode, a lithium secondary battery was produced in the same manner as in Example 1.

### Comparative Example 2: Production of positive electrode (mixture of positive electrode active material and oxide-based solid electrolyte) and lithium secondary battery

A non-aqueous organic solvent composition was prepared by mixing ethylene carbonate(EC) and ethylmethyl carbonate(EMC) at a volume ratio of 30:70. 5 wt.% of trimethylolpropane triacrylate(TMPTA) and 0.02 wt.% of AIBN as a polymerization initiator were added to the composition, and mixed to prepare a gel polymer electrolyte composition.

To such a gel polymer electrolyte composition, a positive electrode active material of lithium nickel cobalt manganese composite oxide (NCM 811; D50: 10 *µ*m) containing 80 mol% of nickel among all transition metals, and an oxide-based solid electrolyte of LiAl_{0.3}Ti_{1.7}(PO₄)₃ (LATP-based) compound with D50: 300nm were added in the same amount as in Example 1 and mixed. This mixture was then placed in a heating chamber and heated at 70°C for 5 hours to prepare a positive electrode active material.

In such a positive electrode active material, the positive electrode active material particles and the oxide-based solid electrolyte particles were present in a mixed and dispersed state on the gel polymer in which the TMPTA was cured and crosslinked.

The mixed positive electrode active material: conductive material (carbon nanotube): binder (PVdF) were mixed at a weight ratio of 97:1:2, and dispersed in NMP solvent at 3000rpm to prepare a slurry. The slurry was then coated with a uniform thickness on a 25 *µ*m thick aluminum foil using a blade-type coating machine which is a Mathis coater (Labdryer/coater type LTE, Werner Mathis AG), dried in a vacuum oven at 130°C for 24 hours, and rolled using a roll press machine to produce a positive electrode for a lithium secondary battery.

By using this positive electrode, a lithium secondary battery was produced in the same manner as in Example 1.

### Experimental Example 1: Production of composite positive electrode active material, positive electrode, and lithium secondary battery

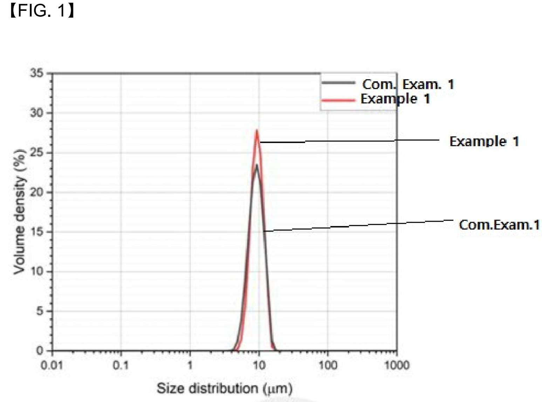

The particle size distribution of the composite positive electrode active material of Example 1 and the positive electrode active material of Comparative Example 1 was analyzed using a particle size analyzer (Malvern Mastersizer), and the analysis results are shown in FIG. 1. Referring to FIG. 1,itwas confirmed that the composite positive electrode active material of Example 1 has a single peak at 9.0 *µ*m corresponding to D50, and a SPAN value of 0.5 to 0.8 *µ*m, similarly to the positive electrode active material of Comparative Example 1.

It was confirmed therefrom that in the composite positive electrode active material of Example 1, the oxide-based solid electrolyte particles coated onto the positive electrode active material particles were not detached but uniformly coated onto the positive electrode active material particles by a crosslinked binder.

### Experimental Example 2: Evaluation of resistance for each state of charge (SOC)

The resistance of the lithium secondary batteries of Example 1 and Comparative Examples 1 and 2 was measured for each state of charge (SOC) while repeatedly performing the charge/discharge test at room temperature (about 25°C) under the conditions: 1) 0.2C - 0.33C charge (cut-off: 4.2V, 0.05C)and2) 0.2C - 0.33C discharge (cut-off: 2.5V).

Specifically, the above charge/discharge test was repeated under SOC settings of 10% to 90%. After each charge/discharge, the direct current resistance measurement (2.5C discharge (cut-off: 10s or 2V)) was performed.

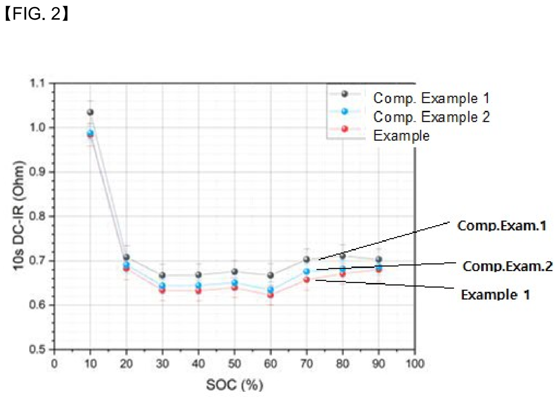

The resistance measurement results for each state of charge are shown in FIG. 2, and the resistance evaluation results at SOC 10% and 50% are shown in Table 1 below:

**[Table 1]**

| SOC(%) | Comparative Example 1(Ω) | Comparative Example 2(Ω) | Example 1(Ω) |
|---|---|---|---|
| 50 | 0.6745 | 0.65091 | 0.63909 |
| 10 | 1.03454 | 0.98818 | 0.98364 |

Referring to Table 1 and FIG. 2, it was confirmed that the lithium secondary battery using the composite positive electrode active material of Example 1 exhibits low resistance and high ionic conductivity for each state of charge, and especially shows excellent effectiveness in the SOC range of 50 to 70%, as compared to Comparative Example 1 (using a general positive electrode active material) and Comparative Example 2 (mixing positive electrode active material and oxide-based solid electrolyte).

### Experimental Example 3: Rate evaluation

A charge/discharge test was conducted for the lithium secondary batteries of Example 1 and Comparative Examples 1 and 2 at a temperature of 25°C.

Specifically, charge was performed under the conditions of 0.2C (cut-off: 4.2V, 0.05C), and discharge was performed at different conditions of 0.2C, 0.33C, 0.5C, 1C, 2C, 3C (cut-off: 2.5V). Under each discharge rate, charge/discharge tests were conducted for 3 to 30 cycles each, and then the capacity retention was evaluated. The comparative evaluation results of the capacity retention under discharge rate of 3C (@ 16 to 18 cycles) are shown in Table 2 below:

**[Table 2]**

| Discharge rate | Capacity maintenance (%) of Comparative Example 1 | Capacity maintenance (%) of Comparative Example 2 | Capacity maintenance (%) of Example 1 |
|---|---|---|---|
| 3C | 61.19 | 68.14 | 70.05 |

Referring to Table 2, it was confirmed that the lithium secondary battery of Example 1 has a higher discharge capacity retention and excellent output characteristics than Comparative Examples 1 and 2 under the high discharge rate of 3C.

## Claims

1. A composite positive electrode active material comprising:
positive electrode active material particles; and
oxide-based solid electrolyte particles and a crosslinked polymer binder formed on the positive electrode active material particles,
wherein the oxide-based solid electrolyte particles are adhered to the surface of the positive electrode active material particles via the crosslinked polymer binder.

2. The composite positive electrode active material of claim 1, wherein:
the positive electrode active material particles include lithium metal oxide containing lithium; and two or more transition metals including nickel, and
the lithium metal oxide contains 80 mol% or more of nickel based on the total transition metal content excluding lithium.

3. The composite positive electrode active material of claim 1, wherein the oxide-based solid electrolyte particles include at least one lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte.

4. The composite positive electrode active material of claim 1, wherein the oxide-based solid electrolyte particles include at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, **LLTO(lithium** lanthanum titanium oxide)-based compound, LSTP(lithium silicon titanium phosphate)-based compound, and LGPO(lithium germanium phosphate)-based compound.

5. The composite positive electrode active material of claim 1, wherein the crosslinked polymer binder includes a polymer crosslinked by curing one or more polymers, copolymers or mixtures selected from the group consisting of a polyvinylidene fluoride-based polymer, a polyvinyl alcohol-based polymer, a cellulose-based polymer,a polyvinylpyrrolidone-based polymer, a polytetrafluoroethylene-based polymer, and a polyolefin-based polymer.

6. The composite positive electrode active material of claim 1, wherein:
the positive electrode active material particles have an average particle diameter (D50) of 3 to 15 *µ*m, and
**the oxide-based** solid electrolyte particles have an average particle diameter (D50) of 100 nm to 1.3 *µ*m.

7. The composite positive electrode active material of claim 6, wherein the composite positive electrode active material has a SPAN of particle size distribution of 0.3 to 5 *µ*m.

8. The composite positive electrode active material of claim 1, wherein the oxide-based solid electrolyte particles are included in an amount of 0.1 to 5 parts by weight based on 100 parts by weight of the positive electrode active material particles.

9. The composite positive electrode active material of claim 1, wherein the crosslinked polymer binder is included in an amount of 0.03 to 2 parts by weight based on 100 parts by weight of the positive electrode active material particles.

10. A preparation method of the composite positive electrode active material of claim 1, the method comprising the steps of:
mixing positive electrode active material particles, oxide-based solid electrolyte particles, and a polymer binder; and
heat-curing the mixture.

11. The preparation method of claim 10, wherein the heat curing is carried out at a temperature of 100 to 200°C.

12. The preparation method of claim 10, wherein the heat curing is carried out in the presence of a crosslinking agent or a curing initiator.

13. The preparation method of claim 10, further comprising milling the resulting product after the heat curing.

14. A positive electrode for a lithium secondary battery comprising:
a metal current collector; and
a positive electrode active material layer formed on the metal current collector and comprising the composite positive electrode active material of claim 1 and a conductive material.

15. The positive electrode for a lithium secondary battery of claim 14, wherein the positive electrode active material layer further comprises a polymer binder of the same kind as the crosslinked polymer binder of the composite positive electrode active material.

16. The positive electrode for a lithium secondary battery of claim 15, wherein the polymer binder includes at least one selected from the group consisting of a polyvinylidene fluoride-based polymer, a polyvinyl alcohol-based polymer, a cellulose-based polymer, a polyvinylpyrrolidone-based polymer, a polytetrafluoroethylene-based polymer and a polyolefin-based polymer.

17. A lithium secondary battery comprising the positive electrode of claim 14; a negative electrode; and an electrolyte.

18. The lithium secondary battery of claim 17, wherein the lithium secondary battery further comprises a separation membrane interposed between the positive electrode and the negative electrode, or
wherein the electrolyte has a form of an electrolyte membrane or an electrolyte film containing a solid electrolyte, which is interposed between the positive electrode and the negative electrode.
